# EUROPEAN PATENT SPECIFICATION

(11) **EP 1 582 949 B1**
(45) Date of publication and mention of the grant of the patent: **17.08.2016**
(21) Application number: 05007206.5
(22) Date of filing: 01.04.2005
(51) Int. Cl.: G05B 19/042, G05B 19/409, G06F 9/44

(54) **Method for automatic modeling a process control system and corresponding process control system**
Verfahren, um ein Prozessteuerungssystem automatisch zu modellieren und entsprechendes Prozessteuerungssystem
Système pour modelliser automatiquement un dispositif de contrôle de processus et dispositif de contrôle de processus correspondant

(30) Priority: 02.04.2004 US 816666
(43) Date of publication of application: 05.10.2005
(73) Proprietor: VEGA Grieshaber KG, 77709 Wolfach (DE)
(72) Inventor: Faist, Fridolin, 77709 Wolfach (DE); Isenmann, Andreas, 77716 Haslach i. K. (DE)
(74) Representative: Maiwald Patentanwalts GmbH

(56) References cited:
- WO-A-01/29632
- MICROCHIP TECHNOLOGY INC.: "MPLAB IDE v6.xx Quick Start Guide"[Online] 2003, XP002515324 Retrieved from the Internet: URL:http://public.enst-bretagne.fr/~moga/I SI407/mplab_quick_start.pdf> [retrieved on 2009-02-16]

## Description

### TECHNICAL FIELD OF THE INVENTION

The present invention relates to a method for modeling a process control system and to a corresponding process control system.

### BACKGROUND OF THE INVENTION

When process control systems are concerned, and a model of a real process control system is to be reproduced by means of graphical elements, it has to be considered that the number of graphical elements required increases with complexity of the real existing system. Usually, the graphical user interface offers the possibility, to freely position these graphical elements of the model on a working surface of the user interface. Moreover, the user interface usually is adapted to connect these graphical elements communicatingly to the real existing system.

The establishment of the model of a real existing system by means of graphical elements can basically be described as follows:
The elements of a user interface are arranged in a tree structure. This tree structure reflects the logical arrangement or function of the elements, respectively, in the real system.

Such a system could e.g. comprise a host-PC having a serial interface, a communication device and at least one sensor connected thereto via a bus. Each element of this system can make one or several graphical elements (windows) available for visualizing e.g. measurement values or for handling the system. Thus, different windows are provided for visualizing measured values and diagnoses messages. Moreover, windows exist, according to which parameters of the respective elements can be varied. Usually, these windows are adapted to be freely positioned on the working surface of the user interface.

According to for example Microsoft Visual Studio it is able to store the listing of all files involved in a working project. Also the arrangement of the graphical windows, by means of which the files of the working project can be processed, can be stored. Therefore, upon reloading of such a project, the user interface can be restored and then is in the same state, as it was during shut down.

However, it would be desirable to also store and restore the condition of the elements involved, for example with respect to communication. For the user, it would be desirable to improve the complex structure of a model of a real system, the positioning of the involved graphical elements and the communication, emanating from these elements.

WO 01/29632 A2 relates to a method and apparatus for graphically managing test definitions of a field management system. The field management system comprises a graphical interface through which a user may manage the test definitions of the filed management system. The graphical interface includes device icons which may be associated with device specific information relating to a field device. Further, each device icon may be associated with a test procedure icon that identifies a test procedure, and a test definition for the field device relating to the device icon may be created with the test procedure and testing data.

Microchip Technology Inc., "MPLAB IDE v6.xx Quick Start Guide", 2003 relates to an integrated development environment with a comprehensive editor, project manager and a design desktop for application development of embedded designs using microchip microcontrollers. An IDE is able to store and reload properties of elements of the user interface of the IDE.

### SUMMARY OF THE INVENTION

Implementations of the invention can include one or more of the following features. According to an aspect of the present invention, a method for automatic modeling a process control system is provided, according to claim 1.

Moreover, handling software is provided which is used to store the tree structure as well as the list of windows and their attributes, whereby the handling software further stores the position of the input windows during the current operation.

According to another aspect of the invention, the handling software stores the communication status, indicating an online or offline status, respectively, for storing the state of the elements. For storing the state of the elements, the handling software stores the state of the associated user interface of the respective input windows.

Yet another aspect is that the input windows for setting and monitoring the target apparatus provided by the elements in the project tree serve for display of measured values, for diagnosis or for parametrizing.

According to still another aspect of the present invention, the current state of the input windows opened during operation of the process control system is transmitted to the handling software in a XML string. The state of the input windows opened during operation of the process control system is queried and stored by conventional interface methods.

Still another aspect is that the projects and the associated states of the elements of the project are stored in project files. Session information is stored in the project files or references to the files including session information are stored. Upon opening the project, it is verified whether session information is present, and if present, the last present view of the project with all opened dialogs is restored and all connections of the last session are restored.

According to still another aspect of the present invention, a session manager manages a list of sessions and the names of the active sessions for each project and stores the latter in a non-volatile project directory. The session manager offers a dialog during loading of a project, in which the names of all available sessions for a project are offered for selection.

Furthermore, a method for automatic modeling a process control system comprising at least one target apparatus is provided, whereby elements of a user interface are arranged in a tree structure reflecting the topography of the elements in the process control system, whereby each element is assigned to at least one input window having a plurality of attributes for setting and/or monitoring the target apparatus controllable in the process control system, whereby a handling software stores the current arrangement of the tree structure as a project, a list of all windows opened during the same current operation as well as their attributes as an operating session, and the position and/or the communication status, indicating an online or offline status, respectively, of the user interface of a respective input window, to thereby be able to restore the state of the elements when loading the process control system again.

One more aspect of the present invention is a process control system according to claim 12.

The memory of the process control system is adapted to store the position of the input windows. The memory is further adapted to store the communication status, indicating an online or offline status, respectively, of the input window. Moreover, the memory is adapted to store the state of the user interface associated to respective input windows. Further, the memory is adapted to store several operating sessions for each project.

According to another aspect of the present invention, the process control system is adapted to be implementable permanently in a frame application. The system can also be adapted to be implementable into the frame application as add-in.

Yet another aspect of the present invention is that the input windows are windows for visualizing measurement values obtained by the at least one target apparatus. The input windows can also be windows for diagnosis messages.

According to still one more aspect, the process control system comprises a session manager.

### BRIEF DESCRIPTION OF THE DRAWINGS

For further explanation and better understanding, several exemplary embodiments of the present invention will be described below in more detail with reference to the attached drawings, of which:
- Fig. 1: is a schematic diagram of a process control system;
- Fig. 2: is a screenshot of a window assigned to PACTware;
- Fig. 3: is another screenshot of a PACTware window;
- Fig. 4: shows a window for storing a session;
- Fig. 5: shows a window for loading a session;
- Fig. 6: shows a complete screenshot for loading a session.

### DESCRIPTION OF EXEMPLARY EMBODIMENTS OF THE INVENTION

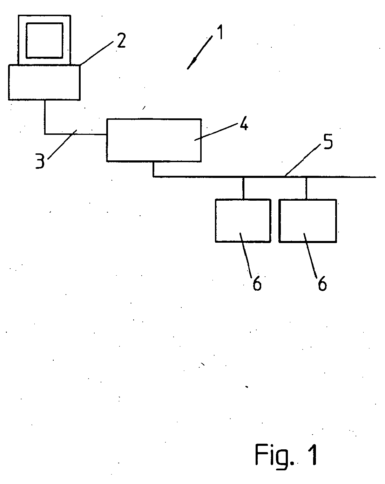

Fig. 1 shows a schematic diagram of a process control system 1, comprising a PC 2, connected to a control unit 4 via an interface 3. The control unit is conncected via a bus system 5 to two target apparatuses 6 which in this case are sensors.

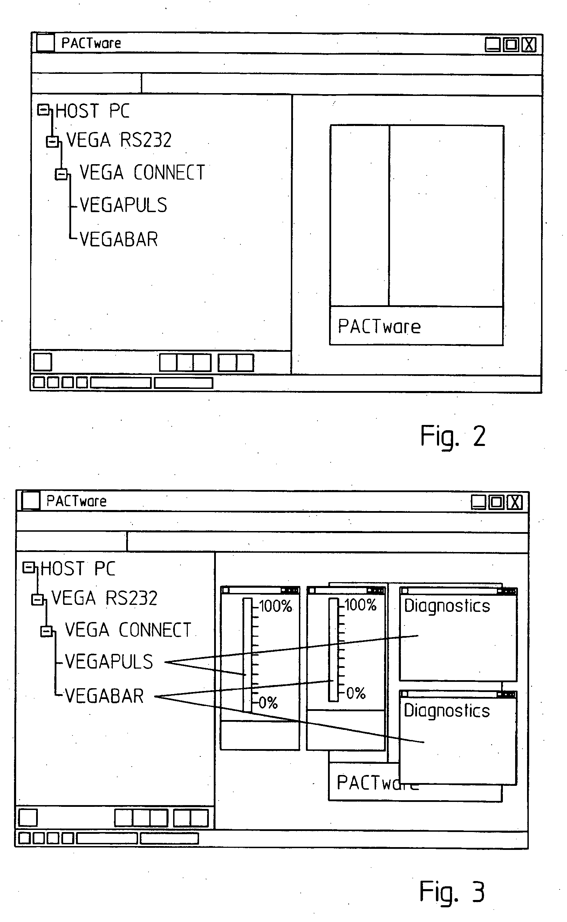

Fig. 2 displays a screenshot of a window of the PACTware software, indicating the tree structure of the process control system: A host PC having a serial interface is connected via a communication apparatus to two sensors. According to Fig. 3, the screenshot shows that there are different windows for visualizing measured values and diagnosis messages. Moreover, there are windows to change parameters of the respective elements. Theses windows can all be positioned freely on the working surface.

The present invention can be employed in operation tools as PACTware. These operation tools make different elements available in an apparatus catalogue for modeling a project. Single entities of these elements of the apparatus catalogue are then adapted into the project tree, to obtain a model of a real project from the sector process or automation, respectively.

Each of these elements in a project tree can make different windows for setting and monitoring a target apparatus available. Usually, the following groups are distinguished: display of measured values, diagnosis and parametrizing.

The handling software gains knowledge of all present properties of the elements involved and then stores these for restoring. These properties comprise in particular:
- the list of all opened input windows as well as their position,
- the communication status (online or offline) of each project node, as well as
- the state of the respective operating interface of the respective input window.

For example, each input window can make several input forms available, on which several elements for data input are present. For the complete restoring of the state it is thus necessary, to transmit the current status of the user interface of the input window to the handling software. This can for example result such that according to the conventional interface method this current state of all opened windows is transmitted in respective XML strings to the handling software. Moreover, the handling software can influence the current state of the input window such that by using the conventional interface method, an XML string is transmitted to the window, describing the targeted state.

According to the present invention, the handling software is extended by the option to query the properties of all opened input windows of the project elements, and to store them subsequently. Moreover, the handling software is able to regenerate all current windows of a session and to relegate them into their original state. This mechanism operates for example by means of conventional interface methods, using XML strings as transmission parameter.

When leaving the user interface, the latter collects all information of the current view as well as the connection status (termed as session in the following). This information determined is stored in a non-volatile project directory (in the project file itself or in a separate file, being referenced in the project file).

When opening a project under the named operating interface, at first all project data is loaded. In a further step, the application verifies, whether the project file contains session information or a reference to a file containing session information, respectively. In case session information is present, then the last present sight of the project with all opened dialogs is regenerated on one hand, on the other hand, all connections, which were present during the last session, are regenerated. This mechanism can be integrated into the handling software permanently or can be provided as an add-in of the true handling software.

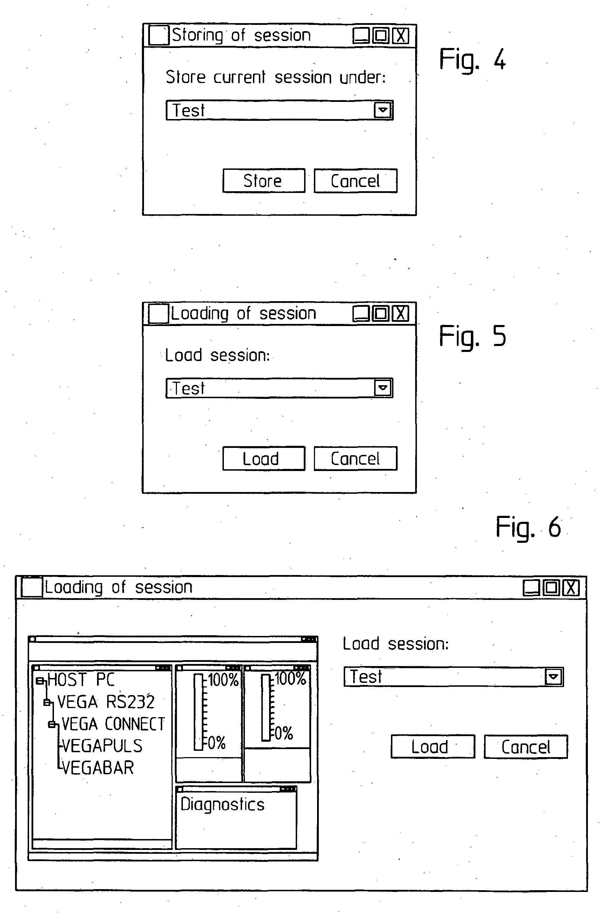

The handling software can also comprise a session manager. As can be seen from Fig. 4, the actual session can be stored according to this window. Also several sessions with respect to a project can be stored and the data restored. The information of a session comprises the list of all opened input windows with respective states. Thus, the data of the entire project is only existent for one time and is only stored at one point.

However, different views of the project can be defined. Thus, for example only distinct sections of the project can be combined to one view or several views with different tasks are defined. Hereby, a special view of the current diagnosis information or view for monitoring the current measurement values would be appropriate.

The session manager is able to manage a list of sessions with respect to each project as well as the names of the active session. In Fig. 4, a dialog is offered for storing of the session. In this dialog, a name for the session to be stored can be selected. In case the button provided in the dialog for storing the session is activated, then the session manager collects all information of the current view as well as the connection statuses. This information is added to the list of all sessions of the current project under the name selected for the session. In case the selected name already exists in this list, then information of the already present session is replaced by information of the current session. Further, the selected name is adopted as name of the active session. The updated list of the sessions as well as the name of the active session then is stored in a non-volatile project directory (in the project file itself or in a separate file, being referenced in the project file).

In Fig.5, it can be seen that the session manager offers a dialog for loading a session. In the dialog, the names of all sessions being available for the project are offered for selection. As extension, the dialog can also offer a window, in which the session is displayed as preview, to facilitate the selection of the session to be loaded, as can be seen from Fig. 6 In case the button for loading of a session present in the dialog is actuated, at first all opened windows are closed. Then, the view of the project stored in the selected session with all opened dialogs is restored. Connections no longer required for the view to be loaded, are abolished. However, connections which are required, but are not present, are established.

The name of the session loaded is stored as active session in the non-volatile project directory (in the project file itself or in a separate file, being referenced in the project file).

Upon opening a project by means of the user interface, at first all project data is loaded. In a further step, the application verifies whether the project file contains session information or a reference to a file containing session information, respectively. In case session information is present, then it is verified whether a name of an active session was stored with respect to the project. Is this the case, the session stored under this name is regenerated. This procedure is the same as during loading of a session. As already mentioned, the session manager can either be a fixed component of the handling software or can be realized as add-in to the actual handling software.

The present invention can be employed to restore communication links present at the point of time of storing during loading of a project automatically. Therefore, the starting procedure of a project is rendered much easier. As in prior art it was necessary that every window had to be opened after loading of the project manually and the communication links had to be generated manually, on the basis of the present invention the manual activity can be automated. Also distinct communication links concerning distinct nodes of the whole project can be generated selectively. This is of particular importance with respect to shared systems, in which certain parts of the project are only accessible via modem connections. Here, according to the present invention, a precise definition, for which node a connection should be generated, and for which node no connection should be generated, is enabled.

## Claims

1. A method for automatic modeling a process control system (1),
whereby elements of a user interface are arranged in a tree structure reflecting the topography of the elements in the process control system (1),
whereby each element is assigned to at least one input window having a plurality of attributes for setting and/or monitoring a target apparatus (6) controllable in the process control system (1),
whereby the current arrangement of the tree structure is stored as a project, and
whereby a list of all input windows opened during the same current operation and properties of each input window are stored as an operating session associated with the project, the properties of each input window comprising the attributes of the input window and the communication status, indicating an online or offline status, of the input window, to thereby be able to restore the properties of the input windows and only the required communication links to distinct nodes of the complete project when loading the project again.

2. The method according to claim 1, whereby a handling software is used to store the tree structure as well as the list of windows and their attributes, whereby the handling software further stores the position of the input windows during the current operation.

3. The method according to claim 2, whereby the handling software stores the state of the associated user interface of the respective input windows.

4. The method according to claim 1, whereby the input windows for setting and monitoring the target apparatus (6) provided by the elements in the project tree serve for display of measured values, for diagnosis or for parametrizing.

5. The method according to claim 1, whereby the current state of the input windows opened during operation of the process control system (1) is transmitted to the handling software in a XML string.

6. The method according to claim 1, whereby the state of the input windows opened during operation of the process control system (1) is queried and stored by conventional interface methods.

7. The method according to claim 1, whereby the project and the operating session associated with the project are stored in project files.

8. The method according to claim 1, whereby references to files including the operating session are stored in project files.

9. The method according to claim 1, whereby upon opening the project it is verified whether session information is present, and if present, the last present view of the project with all opened windows is restored and all connection links of the last session are restored.

10. The method according to claim 1, whereby a session manager manages a list of sessions and the names of the active sessions for each project and stores the latter in a non-volatile project directory.

11. The method according to claim 10, whereby the session manager offers a dialog during loading of a project, in which the names of all available sessions for a project are offered for selection.

12. A process control system (1) comprising
a host PC (2); and
at least one target apparatus (6);
wherein the at least one target apparatus (6) is connected to the host PC (2) via a bus system (5),
whereby the process control system (1) is adapted to be displayed in form of a tree structure on a window,
whereby the tree structure comprises nodes, each node providing at least one input window having a plurality of attributes for setting and/or monitoring a target apparatus (6) assigned thereto,
whereby a memory of the process control system (1) is adapted to store the arrangement of the tree structure as a project, and
whereby the memory is adapted to store a list of all input windows opened during operation and properties of each input window as an operating session associated with the project, the properties of each input window comprising the attributes of the input window and the communication status, indicating an online or offline status, of the input window, to thereby be able to restore the properties of the input windows and only the required communication links to distinct nodes of the complete project when loading the project again.

13. The process control system (1) according to claim 12, whereby the memory is adapted to store the position of the input windows.

14. The process control system (1) according to claim 12, whereby the memory is adapted to store the state of the user interface associated to respective input windows.

15. The process control system (1) according to claim 12, whereby the memory is adapted to store several operating sessions for each project.

16. The process control system (1) according to claim 12, whereby the system is adapted to be implementable permanently in a frame application.

17. The process control system (1) according to claim 12, whereby the system is adapted to be implementable into the frame application as add-in.

18. The process control system (1) according to claim 12, whereby the input windows are windows for visualizing measurement values obtained by the at least one target apparatus (6).

19. The process control system (1) according to claim 12, whereby the input windows are windows for diagnosis messages.

20. The process control system (1) according to claim 12, comprising a session manager.

## Patentansprüche

1. Verfahren, um ein Prozesssteuerungssystem (1) automatisch zu modellieren,
wobei Elemente einer Benutzeroberfläche in einer Baumstruktur angeordnet werden, welche der Topografie der Elemente in dem Prozesssteuerungssystem (1) entspricht,
wobei jedes Element wenigstens einem Eingabefenster mit mehreren Attributen zum Einstellen und / oder zum Überwachen einer Zielvorrichtung (6) zugeordnet wird, welche im Prozesssteuerungssystem steuerbar ist (1),
wobei die gegenwärtige Anordnung der Baumstruktur als ein Projekt gespeichert wird, und
wobei eine Liste aller Eingabefenster, die im gegenwärtigen Betrieb geöffnet sind, sowie Eigenschaften jedes Eingabefensters als eine mit dem Projekt verknüpfte Betriebssitzung gespeichert werden, wobei die Eigenschaften jedes Eingabefensters die Attribute des Eingabefensters und den Kommunikationsstatus des Eingabefensters, der einen Online- oder einen Offline-Status angibt, umfassen, um somit in der Lage zu sein, die Eigenschaften der Eingabefenster und nur die erforderlichen Kommunikationsverbindungen mit bestimmten Knoten des gesamten Projekts wiederherzustellen, wenn das Projekt wieder geladen wird.

2. Verfahren nach Anspruch 1, wobei eine Verarbeitungssoftware eingesetzt wird, um die Baumstruktur und die Liste der Fenster und ihrer Attribute zu speichern, wobei die Verarbeitungssoftware ferner die Position der Eingabefenster im gegenwärtigen Betrieb speichert.

3. Verfahren nach Anspruch 2, wobei die Verarbeitungssoftware den Zustand der verknüpften Benutzeroberfläche der jeweiligen Eingabefenster speichert.

4. Verfahren nach Anspruch 1, wobei die Eingabefenster zum Einstellen und Überwachen der Zielvorrichtung (6), bereitgestellt durch die Elemente im Projektbaum, zum Darstellen von Messwerten, zu Diagnosezwecken und zur Parametrierung dienen.

5. Verfahren nach Anspruch 1, wobei der gegenwärtige Zustand der Eingabefenster, die beim Betrieb des Prozesssteuerungssystems (1) geöffnet werden, in einem XML-String an die Verarbeitungssoftware übermittelt wird.

6. Verfahren nach Anspruch 1, wobei der Zustand der Eingabefenster, die beim Betrieb des Prozesssteuerungssystems (1) geöffnet werden, abgefragt und mit herkömmlichen Schnittstellenverfahren gespeichert wird.

7. Verfahren nach Anspruch 1, wobei das Projekt und die mit dem Projekt verknüpfte Betriebssitzung in Projektdateien gespeichert werden.

8. Verfahren nach Anspruch 1, wobei Verweise auf die Dateien, die die Betriebssitzung enthalten, in Projektdateien gespeichert sind.

9. Verfahren nach Anspruch 1, wobei beim Öffnen des Projekts verifiziert wird, ob Sitzungsinformationen vorliegen und, falls diese vorliegen, die zuletzt vorliegende Ansicht des Projekts mit allen geöffneten Fenstern wiederhergestellt wird und alle Verbindungen der letzten Sitzung wiederhergestellt werden.

10. Verfahren nach Anspruch 1, wobei ein Sitzungsmanager eine Liste von Sitzungen und die Namen der aktiven Sitzungen für jedes Projekt verwaltet und letztere in einem nichtflüchtigen Projektverzeichnis speichert.

11. Verfahren nach Anspruch 10, wobei der Sitzungsmanager beim Laden des Projekts einen Dialog anbietet, in dem die Namen aller verfügbaren Sitzungen für ein Projekt zur Auswahl angeboten werden.

12. Prozesssteuerungssystem (1), umfassend:
einen Host-PC (2); und
wenigstens eine Zielvorrichtung (6);
wobei die wenigstens eine Zielvorrichtung (6) über ein Bus-System (5) mit dem Host-PC (2) verbunden ist,
wobei das Prozesssteuerungssystem (1) angepasst ist, um in Form einer Baumstruktur in einem Fenster angezeigt zu werden,
wobei die Baumstruktur Knoten umfasst, wobei jeder Knoten wenigstens ein Eingabefenster mit mehreren Attributen zum Einstellen und / oder Überwachen einer diesem zugeordneten Zielvorrichtung (6) umfasst,
wobei ein Speicher des Prozesssteuerungssystems (1) angepasst ist, um die Anordnung der Baumstruktur als ein Projekt zu speichern, und
wobei der Speicher angepasst ist, eine Liste aller Eingabefenster, die im gegenwärtigen Betrieb geöffnet sind, sowie Eigenschaften jedes Eingabefensters als eine mit dem Projekt verknüpfte Betriebssitzung zu speichern, wobei die Eigenschaften jedes Eingabefensters die Attribute des Eingabefensters und den Kommunikationsstatus des Eingabefensters, der einen Online- oder einen Offline-Status des Eingabefensters angibt, umfassen, um somit in der Lage zu sein, die Eigenschaften der Eingabefenster und nur die erforderlichen Kommunikationsverbindungen mit bestimmten Knoten des gesamten Projekts wiederherzustellen, wenn das Projekt wieder geladen wird.

13. Prozesssteuerungssystem (1) nach Anspruch 12, wobei der Speicher angepasst ist, die Position der Eingabefenster zu speichern.

14. Prozesssteuerungssystem (1) nach Anspruch 12, wobei der Speicher angepasst ist, den Zustand der mit entsprechenden Eingabefenstern verknüpften Benutzeroberfläche zu speichern.

15. Prozesssteuerungssystem (1) nach Anspruch 12, wobei der Speicher angepasst ist, mehrere Betriebssitzungen für jedes Projekt zu speichern.

16. Prozesssteuerungssystem (1) nach Anspruch 12, wobei das System angepasst ist, dauerhaft in einer Rahmenanwendung implementiert werden zu können.

17. Prozesssteuerungssystem (1) nach Anspruch 12, wobei das System angepasst ist, als Add-In in der Rahmenanwendung implementiert werden zu können.

18. Prozesssteuerungssystem (1) nach Anspruch 12, wobei die Eingabefenster Fenster zum Darstellen von Messwerten sind, die von der wenigstens einen Zielvorrichtung (6) erhalten worden sind.

19. Prozesssteuerungssystem (1) nach Anspruch 12, wobei die Eingabefenster Fenster zum Darstellen von Diagnosenachrichten sind.

20. Prozesssteuerungssystem (1) nach Anspruch 12, umfassend einen Sitzungsmanager.

## Revendications

1. Procédé pour modéliser automatiquement un système de commande de processus (1),
dans lequel des éléments d'une interface utilisateur sont organisés en une structure arborescente reflétant la topographie des éléments dans le système de commande de processus (1),
dans lequel chaque élément est affecté à au moins une fenêtre d'entrée ayant une pluralité d'attributs pour régler et/ou surveiller un appareil cible (6) pouvant être commandé dans le système de commande de processus (1),
dans lequel l'organisation actuelle de la structure arborescente est mémorisée sous la forme d'un projet, et
dans lequel une liste de toutes les fenêtres d'entrée ouvertes pendant la même opération actuelle et des propriétés de chaque fenêtre d'entrée sont mémorisées sous la forme d'une session d'exploitation associée au projet, les propriétés de chaque fenêtre d'entrée comportant les attributs de la fenêtre d'entrée et l'état de communication, indiquant un état en ligne ou hors ligne, de la fenêtre d'entrée, pour pouvoir ainsi restaurer les propriétés des fenêtres d'entrée et uniquement les liaisons de communication requises pour distinguer des noeuds du projet complet lors du rechargement du projet.

2. Procédé selon la revendication 1, dans lequel un logiciel de traitement est utilisé pour mémoriser la structure arborescente ainsi que la liste de fenêtres et leurs attributs, dans lequel le logiciel de traitement mémorise également la position des fenêtres d'entrée pendant l'opération actuelle.

3. Procédé selon la revendication 2, dans lequel le logiciel de traitement mémorise l'état de l'interface utilisateur associée des fenêtres d'entrée respectives.

4. Procédé selon la revendication 1, dans lequel les fenêtres d'entrée pour régler et surveiller l'appareil cible (6) fournies par les éléments dans l'arborescence de projet servent à afficher des valeurs mesurées, en vue d'un diagnostic ou d'un paramétrage.

5. Procédé selon la revendication 1, dans lequel l'état actuel des fenêtres d'entrée ouvertes pendant le fonctionnement du système de commande de processus (1) est transmis au logiciel de traitement dans une chaîne XML.

6. Procédé selon la revendication 1, dans lequel l'état des fenêtres d'entrée ouvertes pendant le fonctionnement du système de commande de processus (1) est demandé et mémorisé par des méthodes d'interface habituelles.

7. Procédé selon la revendication 1, dans lequel le projet et la session d'exploitation associée au projet sont mémorisés dans des fichiers de projet.

8. Procédé selon la revendication 1, dans lequel des références à des fichiers incluant la session d'exploitation sont mémorisées dans des fichiers de projet.

9. Procédé selon la revendication 1, dans lequel, à l'ouverture du projet, la présence d'informations de session est vérifiée et, si elles sont présentes, la dernière vue présente du projet avec toutes les fenêtres ouvertes est restaurée et toutes les liaisons de connexion de la dernière session sont restaurées.

10. Procédé selon la revendication 1, dans lequel un gestionnaire de session gère une liste de sessions et les noms des sessions actives pour chaque projet et mémorise ce dernier dans un répertoire de projet non-volatil.

11. Procédé selon la revendication 10, dans lequel le gestionnaire de session propose un dialogue pendant le chargement d'un projet, au cours duquel les noms de toutes les sessions disponibles pour un projet sont proposés à la sélection.

12. Système de commande de processus (1) comportant :
un PC hôte (2), et
au moins un appareil cible (6),
dans lequel le au moins un appareil cible (6) est relié au PC hôte (2) via un système de bus (5),
dans lequel le système de commande de processus (1) est adapté pour être affiché sous la forme d'une structure arborescente sur une fenêtre,
dans lequel la structure arborescente comporte des noeuds, chaque noeud fournissant au moins une fenêtre d'entrée ayant une pluralité d'attributs pour régler et/ou surveiller un appareil cible (6) affecté à celle-ci,
dans lequel une mémoire du système de commande de processus (1) est adaptée pour mémoriser l'organisation de la structure arborescente sous la forme d'un projet, et
dans lequel la mémoire est adaptée pour mémoriser une liste de toutes les fenêtres d'entrée ouvertes pendant le fonctionnement et des propriétés de chaque fenêtre d'entrée sous la forme d'une session d'exploitation associée au projet, les propriétés de chaque fenêtre d'entrée comportant les attributs de la fenêtre d'entrée et l'état de communication, indiquant un état en ligne ou hors ligne, de la fenêtre d'entrée, pour pouvoir ainsi restaurer les propriétés des fenêtres d'entrée et uniquement les liaisons de communication requises pour distinguer des noeuds du projet complet lors du rechargement du projet.

13. Système de commande de processus (1) selon la revendication 12, dans lequel la mémoire est adaptée pour mémoriser la position des fenêtres d'entrée.

14. Système de commande de processus (1) selon la revendication 12, dans lequel la mémoire est adaptée pour mémoriser l'état de l'interface utilisateur associée aux fenêtres d'entrée respectives.

15. Système de commande de processus (1) selon la revendication 12, dans lequel la mémoire est adaptée pour mémoriser plusieurs sessions d'exploitation pour chaque projet.

16. Système de commande de processus (1) selon la revendication 12, dans lequel le système est adapté pour pouvoir être mis en oeuvre de manière permanente dans une application cadre.

17. Système de commande de processus (1) selon la revendication 12, dans lequel le système est adapté pour pouvoir être mis en oeuvre dans l'application cadre sous la forme de modules d'extension.

18. Système de commande de processus (1) selon la revendication 12, dans lequel les fenêtres d'entrée sont des fenêtres pour visualiser des valeurs de mesure obtenues par le au moins un appareil cible (6).

19. Système de commande de processus (1) selon la revendication 12, dans lequel les fenêtres d'entrée sont des fenêtres pour des messages de diagnostic.

20. Système de commande de processus (1) selon la revendication 12, comportant un gestionnaire de session.
